# FASCICULE DE BREVET EUROPEEN

(11) **EP 0 538 108 B1**
(45) Date de publication et mention de la délivrance du brevet: **11.09.1996**
(21) Numéro de dépôt: 92402779.0
(22) Date de dépôt: 12.10.1992
(51) Int. Cl.: C03C 14/00, C04B 35/80

(54) **Matériau composite à matrice vitro-céramique ou céramique obtenue par la voie sol-gel et renforcée par des fibres de type carbure de silicium, sa fabrication et ses applications**
Verbundwerkstoff mit einer Glaskeramik- oder Keramikmatrix hergestellt durch das Sol-Gel-Verfahren und verstärkt mit Fasern des Siliciumcarbid-Typs, seine Herstellung und Verwendungen
Composite material with a glass-ceramic or ceramic matrix obtained via the sol-gel process and reinforced with silicon carbide type fibers, its production and uses

(30) Priorité: 18.10.1991 FR 9112873
(43) Date de publication de la demande: 21.04.1993
(73) Titulaire: AEROSPATIALE Société Nationale Industrielle, F-75781 Paris Cédex 16 (FR)
(72) Inventeur: Lespade Pierre, F-33700 Merignac (FR); Larnac, Guy Jean Claude, F-33160 St-Medard en Jalles (FR); Peres, Patrick, F-33160 St-Medard en Jalles (FR); Donzac, Jean-Marc Nicolas Pascal, F-33160 St-Medard en Jalles (FR)
(74) Mandataire: Lepeudry-Gautherat, Thérèse

(56) Documents cités:
- EP-A- 0 322 295
- FR-A- 2 655 327
- CERAMIC ENGINEERING AND SCIENCE PROCEEDINGS. vol. 11, no. 9/10, Octobre 1990, WESTERVILLE,OHIO,US pages 1648 - 1660 T.YAMAMURA ET AL. 'Characteristics of a Ceramic Matrix Composite Using a Continuous Si-Ti-C-O Fiber.'
- CERAMIC ENGINEERING AND SCIENCE PROCEEDINGS. vol. 10, no. 7/8, Août 1989, WESTERVILLE,OHIO,US pages 938 - 951 V.S.R.MURTHY ET AL. 'Interfacial Microstructure and Crystallization in SiC-Glass Ceramic Composites.'

## Description

L'invention a pour objet un nouveau matériau composite à matrice vitro-céramique ou céramique obtenue par la voie sol-gel et renforcée par des fibres de type carbure de silicium qui comportent, outre du carbone et du silicium, du titane, de l'oxygène et éventuellement du bore, sa fabrication et ses applications.

La fabrication de matériaux céramiques composites à matrice vitro-céramique ou céramique obtenue par la voie sol-gel et renforcée par des fibres de carbure de silicium est décrite notamment dans la demande de brevet FR 89 15 987, publiée sous le No. 2 655 327 et dans la demande de brevet européen No. 88 403 231.9, publiée sous le No. 0 322 295 de la présente Demanderesse.

La fibre carbure de silicium (SiC) généralement utilisée dans l'élaboration de composites, notamment en ayant recours au procédé sol-gel, qui est essentiellement, voire totalement constituée de SiC, comme par exemple la fibre commercialisée par la société NIPPON-CARBON sous la dénomination NICALON®, présente certains inconvénients de mise en oeuvre lorsqu'elle est utilisée avec les procédés connus de préparation du renfort fibreux, tels que bobinage filamentaire ou tissage. En effet, ces procédés entraînent des ruptures fréquentes sur les poulies, filières et autres moyens de placement de la fibre, liées à la présence de défauts du type discontinuité des monofilaments constituant la fibre. Ces défauts qui n'existent pas dans la fibre telle que commercialisée apparaissent lors de l'opération de désensimage de la fibre qui est nécessaire avant la mise en oeuvre du procédé d'élaboration du composite (voir par exemple la demande de brevet FR 2 655 327, page 13, lignes 28 à 34).

L'invention a pour buts de réaliser un matériau composite du type susindiqué comprenant un renfort fibreux constitué de fibres plus intéressantes sur le plan des avantages technologiques liés à leur manipulation et présentant moins de défauts, notamment après désensimage, permettant ainsi l'obtention de pièces ayant des caractéristiques mécaniques améliorées, pour une proportion équivalente de fibres.

Ces buts sont atteints selon l'invention grâce à l'utilisation de fibres de type silicium-titane-carbone-oxygène ou Si-Ti-C-O au lieu des fibres de type SiC classiquement utilisées.

T. YAMAMURA et coll., dans Ceram. Eng. Sci. Proc. 11(9-10), 1648-1660 (1990) décrivent succintement la fabrication de composites à matrice céramique obtenue à partir de poudre Si-Ti-C-O, renforcée par des fibres de type Si-Ti-C-O. Toutefois, le procédé qu'ils emploient ne fait pas intervenir un processus sol-gel mais uniquement le chauffage avec compression, en atmosphère d'argon, d'une structure laminée, alternant des fibres tissées et des couches de poudre. Ce document ne suggère aucunement que dans le cadre d'un procédé faisant intervenir un processus sol-gel on pourrait obtenir les avantages inattendus, décrits plus loin, fournis par la présente invention.

L'invention concerne un matériau composite à matrice vitro-céramique ou céramique obtenue par la voie sol-gel et renforcée par des fibres de type SiC dans lequel lesdites fibres sont de type Si-Ti-C-O.

V.S.R. MURTHY et coll., dans Ceram. Eng. Sci. Proc. 10 (7-8), 938-951 (1989) décrivent succintement un matériau composite à matrice vitro-céramique de type BAS, c'est-à-dire constituée de BaO, Al₂O₃ et SiO₂, obtenue par la voie sol-gel et renforcée par des fibres de type Si-Ti-C-O, à savoir des fibres commercialisées sous la dénomination Tyranno® par la société UBE INDUSTRIES. Les auteurs indiquent que les fibres Tyranno® subissent une dégradation sévère pendant le pressage à chaud, en raison de la diffusion à l'intérieur d'éléments de la matrice. Ils précisent que la nécessité d'interfaces de faible cohésion dicte le prérevêtement des fibres.

Ce document aurait donc dû dissuader l'homme du métier d'utiliser des fibres de type Si-Ti-C-O sans prérevêtement, pour fabriquer d'autres matériaux composites à matrice vitro-céramique ou céramique obtenue par la voie sol-gel.

Or selon l'invention, on a trouvé que contrairement à ce qui pouvait être déduit de l'enseignement de ce document, les problèmes évoqués ci-dessus ne se rencontrent pas lorsqu'on utilise une matrice comprenant essentiellement Li₂O, Al₂O₃ et SiO₂ et éventuellement MgO, à savoir une matrice de type LAS ou MLAS, respectivement, avec des fibres de type Si-Ti-C-O non prérevêtues.

Selon l'un de ses aspects, l'invention a donc pour objet un matériau composite à matrice vitro-céramique ou céramique obtenue par la voie sol-gel et renforcée par des fibres longues de type SiC, caractérisé en ce que ladite matrice est du type Li₂O-Al₂O₃-SiO₂ (LAS) ou du type MgO-Li₂O-Al₂O₃-SiO₂ (MLAS) et en ce que lesdites fibres sont du type Si-Ti-C-O sans revêtement préalable.

Les fibres de type Si-Ti-C-O utilisées dans le matériau composite selon l'invention sont avantageusement constituées, en poids, de 48 à 57% de Si, environ 2 % de Ti, 30 à 32 % de C, 12 à 18 % de O et 1 % ou moins de B.

Des fibres de ce type peuvent être obtenues notamment à partir d'un polymère organo-métallique tel que le polytitanocarbosilane (PTC) selon les indications de T. Yamamura et Coll. dans J. Mater. Sci. 23, 2589-94 (1988).

Un produit commercial de ce type qui peut être utilisé dans le cadre de la présente invention, est le TYRANNO LOX M® de la société UBE INDUSTRIES, Ltd (Japon) qui est constitué, en poids, d'environ 53% de Si, 2 % de Ti, 31 % de C, 13% de O et 1 % ou moins de B.

Le matériau composite selon l'invention peut être obtenu par analogie aux procédés connus de l'art antérieur, notamment ceux décrits dans les demandes de brevet FR 2 655 327 et EP 0 322 295 citées plus haut.

Plus particulièrement, il peut être obtenu par exemple selon un procédé qui consiste essentiellement à :
1°) préparer, par la voie sol-gel, une poudre vitro-céramique ayant la composition désirée pour la formation de la matière vitro-céramique ou céramique,
2°) imprégner, après désensimage éventuel, les fibres de type Si-Ti-C-O d'un sol ou d'une barbotine contenant la poudre vitro-céramique,
3°) transformer les fibres imprégnées obtenues en une préforme en nappe et
4°) soumettre la préforme obtenue à un traitement thermique de densification et céramisation de la matrice.

Selon un mode avantageux de réalisation, à l'étape 3°), on bobine les fibres imprégnées sur un mandrin permettant d'obtenir ladite préforme en nappe.

Selon un autre mode de réalisation avantageux de l'invention, le sol ou la barbotine servant à l'imprégnation des fibres renferme un agent retardateur de cristallisation, notamment de l'anhydride borique B₂0₃, ou un précurseur de ce composé. Un tel agent permet de conserver la phase vitreuse durant l'étape de densification du matériau et d'obtenir un matériau à faible porosité résiduelle, sans utilisation d'agent nucléant.

Quel que soit le procédé de fabrication mis en oeuvre pour fabriquer le matériau composite selon l'invention, on constate qu'à proportions égales, les fibres de type Si-Ti-C-O confèrent au matériau obtenu des caractéristiques physiques telles que contrainte à rupture maximum ou contrainte à limite de rupture (UFS) et contrainte à limite élastique maximum ou contrainte à limite élastique (CFS) nettement supérieures à celles obtenues avec les fibres SiC classiques.

Ainsi, l'invention permet d'obtenir des matériaux présentant les propriétés spécifiques (ramenées à un taux de fibre unitaire) suivantes :
- contrainte à rupture maximum : environ 3150 MPa
- contrainte à limite élastique maximun : environ 1300 MPa
- déformation à limite élastique environ : 0,26 % alors qu'avec les fibres SiC de type NICALON® on obtient respectivement, dans les mêmes conditions, environ 1580 MPa, 950 MPa et 0,26 %.

Par ailleurs, la proportion de fibre de type Si-Ti-C-O nécessaire pour obtenir une valeur donnée de ces caractéristiques physiques est très inférieure à celle nécessaire dans le cas des fibres SiC classiques (de l'ordre de la moitié).

Ces effets inattendus permettent notamment d'utiliser des quantités moindres de fibres et d'obtenir les matériaux composites selon l'invention en des temps plus courts.

La présente invention qui fournit des matériaux composites présentant des propriétés remarquables peut être appliquée à des domaines très divers tels que notamment les domaines aéronautique et spatial, pour des applications nécessitant une bonne tenue à moyenne ou haute température (de l'ordre de 600 à 2500°C), c'est-à-dire notamment des cols de tuyère ou des matériaux de protection thermique. Elle peut également être appliquée à la fabrication de certaines pièces de moteurs automobiles telles que rotor de turbo-compresseur, échangeur thermique, piston, arbre de transmission etc... .

Les exemples non limitatifs qui suivent sont destinés à illustrer et expliquer plus en détail l'invention.

### EXEMPLE 1 :

### Composition de type MgO-Li₂O-Al₂O₃-SiO₂ + fibres longues.

On prépare une poudre vitro-céramique ayant la formule suivante :
0,5 MgO - 0,5 Li₂O - Al₂O₃ - 4SiO₂, par exemple comme décrit dans la demande de brevet FR 2 655 327.

Les fibres utilisées sont des fibres longues de carbure de silicium commercialisées par la société UBE sous la référence Tyranno Lox M®. On élimine l'ensimage des fibres à base de résine, par immersion dans un mélange équivolumique d'acétone et d'alcool éthylique pendant 12 heures.

On prépare une barbotine contenant 70 g de la poudre vitro-céramique déshydratée et oxydée à 500°C et désagglomérée sur tamis de 50 µm. Les 70 g sont mélangés à une solution visqueuse de 10 g de polyméthacrylate de méthyle dans 100 cm³ de monochlorobenzène. Les fibres sont imprégnées par la barbotine (réalisée à l'aide des poudres précitées) puis bobinées sur un mandrin permettant la réalisation de nappes de fibres préimprégnées (unidirectionnelles après découpe et mise à plat).

Les nappes préimprégnées sont découpées en pavés carrés de 70 x 70 mm qu'on empile dans un moule en graphite ayant la même section pour réaliser le traitement thermique de densification et de céramisation : élévation de température de 10°C/min jusqu'à 1025°C sous vide avec un premier palier de 30 min à 280°C pour éliminer le polyméthacrylate de méthyle, un deuxième palier de 30 min à 550°C favorisant le réarrangement, un troisième palier de 30 min à 830°C favorisant la cristallisation et la déshydration, poursuite de l'échauffement à 5°C/min sous azote jusqu'à environ 1330°C et palier de 10 min environ à cette température avec pressage sous 11 MPa, refroidissement contrôlé à 20°C/min, sous azote (sous pressage jusqu'à 1000°C).

Le matériau composite obtenu a un taux volumique de fibres de 17% et une densité apparente de 2,44 (densité relative apparente 0,99). L'analyse aux rayons X montre la présence prépondérante d'une solution solide de spodumène β et de cordiérite α.

La résistance à la rupture (UFS) déterminée à l'essai de flexion 4 points sur une éprouvette de largeur 10 mm et d'épaisseur 2,5 mm avec distance entre appuis de 15 et 50 mm et vitesse de mise en charge de 0,1 mm/min est de 570 ± 35 MPa.

La contrainte à la limite élastique (CFS) est de 240 MPa et l'allongement à la limite élastique est de 0,25%.

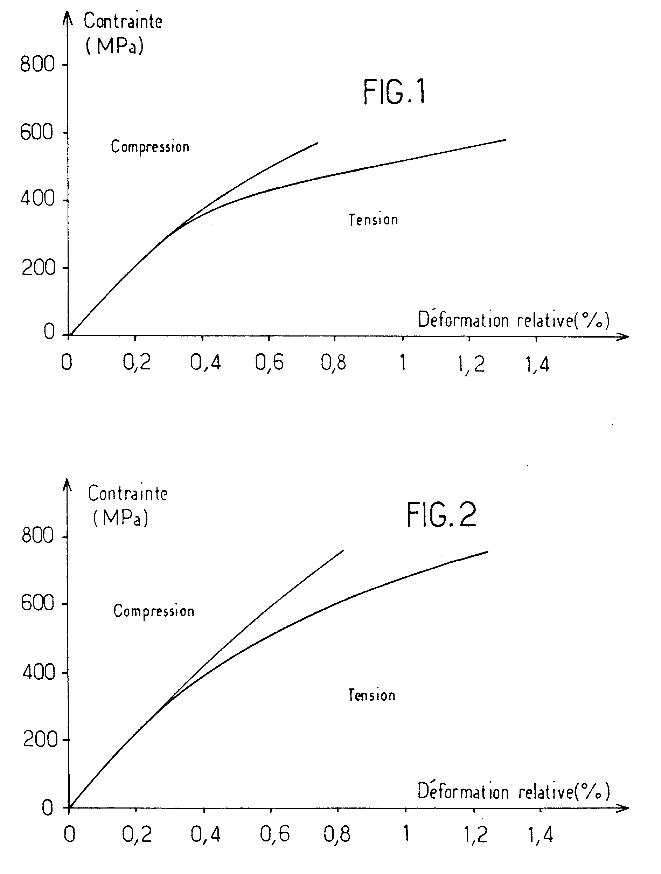

La figure 1 représente les courbes de contrainte en compression et tension, exprimées en MPa, en fonction de la déformation relative en %, pour le composite obtenu dans cet exemple 1.

### EXEMPLE 2 :

On procède exactement comme dans l'exemple 1, si ce n'est que le taux volumique de fibres est de 24 % au lieu de 17% du matériau composite obtenu.

La résistance à la rupture selon le même essai de flexion est alors de 750 MPa, la contrainte à la limite élastique est de 290 MPa et l'allongement à la limite élastique est de 0,27 %.

La figure 2 représente les courbes de contrainte en compression et tension, exprimées en MPa, en fonction de la déformation relative en %, pour le composite obtenu dans cet exemple 2.

### EXEMPLE 3 (comparatif) :

On procède comme dans l'exemple 1 en employant des fibres SiC NICALON® (donc sans titane). Le taux volumique de fibres dans le matériau composite est de 33%. La résistance à la rupture est de 520 MPa, la contrainte à la limite élastique est de 310 MPa et l'allongement à la limite élastique est de 0,27 %.

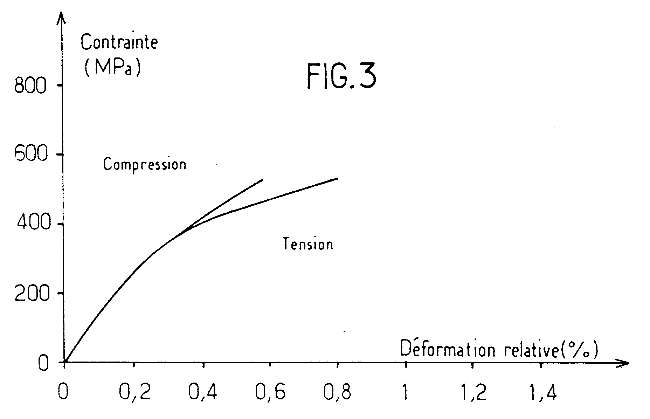

La figure 3 représente les courbes de contrainte en compression et tension, exprimées en MPa, en fonction de la déformation relative en % pour le composite obtenu dans l'exemple 3 comparatif.

La comparaison des différentes courbes permet d'affirmer que le matériau composite obtenu selon l'invention a des caractéristiques nettement améliorées pour des taux de fibres bien inférieurs.

On a donc mis en évidence un matériau nécessitant moins de fibres, d'emploi plus aisé et comportant des caractéristiques améliorées par rapport aux matériaux composites de type connu, obtenus par le même procédé. En particulier, la présence d'une quantité moindre de fibres dans un même volume fait qu'elles sont mieux protégées contre l'oxydation par un plus grand volume de matrice.

Les exemples qui précèdent permettent de constater que les matériaux obtenus selon l'invention présentent les propriétés spécifiques (ramenées à un taux de fibre unitaire) suivantes :
- contrainte à rupture maximum : environ 3150 MPa
- contrainte à limite élastique maximum : environ 1300 MPa
- déformation à limite élastique : environ 0,26 %
alors qu'avec les fibres SiC NICALON® on obtient respectivement 1580 MPa, 950 MPa et 0,26%.

La fibre utilisée dans les exemples 1 et 2 selon l'invention présente en elle-même une contrainte de rupture d'environ 3300 MPa. On constate donc que dans le matériau composite selon l'invention les propriétés de la fibre sont conservées.

Les exemples ci-dessus n'ont aucun caractère limitatif. Il est possible en particulier de combiner différemment ou de modifier les caractéristiques décrites, notamment en ce qui concerne la formule de la composition vitro-céramique, le mode opératoire de préparation du gel, les traitements thermiques de déshydratation et d'oxydation et les traitements de céramisation.

## Revendications

1. Matériau composite à matrice vitro-céramique ou céramique du type Li₂O-Al₂O₃-SiO₂(LAS) ou du type MgO-Li₂O-Al₂O₃-SiO₂ (MLAS) obtenue par la voie sol-gel et renforcée par des fibres longues de type SiC, caractérisé en ce que lesdites fibres sont du type Si-Ti-C-O sans revêtement préalable.

2. Matériau composite selon la revendication 1, caractérisé en ce que les fibres de type Si-Ti-C-O sont constituées, en poids, de 48 à 57 % de Si, environ 2 % de Ti, 30 à 32 % de C, 12 à 18 % de O et 1 % ou moins de B.

3. Matériau composite selon la revendication 2, caractérisé en ce que les fibres de type Si-Ti-C-O sont constituées, en poids, d'environ 53 % de Si, 2 % de Ti, 31 % de C, 13 % de O et 1 % ou moins de B.

4. Matériau composite selon l'une quelconque des revendications 1 à 3, caractérisé en ce qu'il présente les propriétés spécifiques, ramenées à un taux unitaire de fibres, suivantes :
- contrainte à rupture maximum : environ 3150 MPa,
- contrainte à limite élastique maximum : environ 1300 MPa et
- déformation à limite élastique : environ 0,26 %.

5. Procédé pour la fabrication du matériau composite selon l'une quelconque des revendications 1 à 4, caractérisé en ce qu'il comporte essentiellement les étapes consistant à :
1° préparer, par la voie sol-gel,une poudre vitro-céramique ayant la composition LAS ou MLAS désirée pour la formation de la matrice vitro-céramique ou céramique,
2° imprégner, après désensimage d'un éventuel ensimage à base de résine, des fibres longues de type Si-Ti-C-O non prérevêtues d'un sol ou d'une barbotine contenant la poudre vitro-céramique,
3° transformer les fibres longues imprégnées obtenues en une préforme en nappe et
4° soumettre la préforme obtenue à un traitement thermique de densification et céramisation de la matrice.

6. Procédé selon la revendication 5, caractérisé en ce que, à l'étape 3°, on bobine les fibres imprégnées sur un mandrin pour obtenir ladite préforme en nappe.

7. Procédé selon la revendication 5 ou 6, caractérisé en ce que le sol ou la barbotine servant à l'imprégnation des fibres renferme un agent retardateur de cristallisation, notamment de l'anhydride borique B₂O₃, ou un précurseur de ce composé.

8. Utilisation du matériau composite selon l'une quelconque des revendications 1 à 4 dans les domaines aéronautique et spatial, et pour la fabrication de pièces de moteurs automobiles.

## Claims

1. A composite material with a glass-ceramic or ceramic matrix of the Li₂O-Al₂O₃-SiO₂ (LAS) type or of the MgO-Li₂O-Al₂O₃-SiO₂ (MLAS) type obtained by the sol-gel process and reinforced by long fibres of the SIC type, characterized in that said fibres are of the Si-Ti-C-O type without a previous coating.

2. A composite material according to claim 1, characterized in that the fibres of the Si-Ti-C-O type are constituted, by weight, of 48 to 57 % of Si, about 2 % of Ti, 30 to 32 % of C, 12 to 18 % of O and 1 % or less of B.

3. A composite material according to claim 2, characterized in that the fibres of the Si-Ti-C-O type are constituted, by weight, of about 53 % of Si, 2 % of Ti, 31 % of C, 13 % of O and 1 % or less of B.

4. A composite material according to any one of claims 1 to 3, characterized in that it exhibits the following specific properties reduced to a unit fibre rate :
- stress at maximum rupture : about 3150 MPa,
- stress at maximum elastic limit : about 1300 MPa and
- deformation or strain at elastic limit : about 0,26 %.

5. A process for manufacturing the composite material according to any one of claims 1 to 4, characterized in that it essentially consists in :
1° preparing, by the sol-gel process, a glass-ceramic powder having the desired LAS or MLAS composition for the formation of the glass-ceramic or ceramic matrix,
2° after desizing of a possible resin based sizing, impregnating long fibres of the Si-Ti-C-O type non-precoated with a sol or barbotine containing the glass-ceramic powder,
3° transforming the impregnated long fibres thus obtained into a sheet prepreg, and
4° submitting the prepreg thus obtained to a heat treatment for densifying and ceramizing the matrix.

6. A process according to claim 5, characterized in that, in step 3°, the impregnated fibres are coiled onto a mandrel for obtaining said sheet prepreg.

7. A process according to claim 5 or 6, characterized in that the sol or barbotine used for the impregnation of the fibres contains a crystallization retarding agent, in particular boric anhydride B₂O₃, or a precursor of this compound.

8. Use of the composite material according to any one of claims 1 to 4 in aeronautical or spatial applications, and for the production of parts of motor vehicle engines.

## Patentansprüche

1. Verbundwerkstoff mit einer Glaskeramik- oder Keramikmatrix des Typs Li₂O-Al₂O₃-SiO₂ (LAS) oder des Typs MgO-Li₂O-Al₂O₃-SiO₂ (MLAS), die durch das Sol-Gel-Verfahren erhalten wird und durch lange Fasern vom Typ SiC verstärkt ist, dadurch gekennzeichnet, daß die Fasern vom Typ Si-Ti-C-O ohne vorhergehenden Überzug sind.

2. Verbundwerkstoff nach Anspruch 1, dadurch gekennzeichnet, daß die Fasern vom Typ Si-Ti-C-O in Gewichtsprozenten aus 48% bis 57% Si, ungefähr 2% Ti, 30% bis 32% C, 12% bis 18% O sowie 1% oder weniger B bestehen.

3. Verbundwerkstoff nach Anspruch 2, dadurch gekennzeichnet, daß die Fasern vom Typ Si-Ti-C-O in Gewichtsprozenten aus ungefähr 53% Si, 2% Ti, 31% C, 13% O sowie 1% oder weniger B bestehen.

4. Verbundwerkstoff nach einem der Ansprüche 1 bis 3, dadurch gekennzeichnet, daß er die folgenden, auf einen unitären Satz von Fasern bezogenen spezifischen Eigenschaften aufweist:
- maximale Bruchspannung: ungefähr 3.150 MPa,
- maximale Elastizitäts-Grenzspannung: ungefähr 1.300 MPa und
- Elastizitäts-Grenzverformung: ungefähr 0,26%.

5. Verfahren zur Herstellung des Verbundwerkstoffes nach einem der Ansprüche 1 bis 4, dadurch gekennzeichnet, daß es in, wesentlichen die Schritte umfaßt die daraus bestehen:
1) durch das Sol-Gel-Verfahren ein glaskeramisches Pulver herzustellen, das die zur Erzeugung der Glaskeramik- oder Keramikmatrix gewünschte Zusammensetzung LAS oder MLAS aufweist,
2) nach einer Entschlichtung einer eventuellen Schlichte auf der Basis eines Harzes die langen, nicht zuvor überzogenen Fasern vom Typ Si-Ti-C-O mit einem Sol oder einem Schlicker, die das glaskeramische Pulver enthalten, zu imprägnieren.
3) die in einer Gelegevorform erhaltenen langen, imprägnierten Fasern umzuformen und
4) die erhaltene Vorform einer thermischen Behandlung zur Verdichtung und Keramisierung der Matrix zu unterwerfen.

6. Verfahren nach Anspruch 5, dadurch gekennzeichnet, daß man in Schritt 3) die imprägnierten Fasern auf eine Wickelhülse wickelt, um die Gelegevorform zu erzielen.

7. Verfahren nach Anspruch 5 oder 6, dadurch gekennzeichnet, daß das Sol oder der Schlicker, die zur Imprägnierung der Fasern dienen, ein Kristallisationsverzögerungsmittel, insbesondere aus Boranhydrid B₂O₃, oder einen Vorläufer dieser Zusammensetzung enthalten.

8. Verwendung des Verbundwerkstoffs nach einem der Ansprüche 1 bis 4 auf den Gebieten der Luftfahrt und der Raumfahrt sowie zur Herstellung von Teilen von Automobilmotoren.
